# EUROPÄISCHE PATENTSCHRIFT

(11) **EP 3 250 436 B1**
(45) Veröffentlichungstag und Bekanntmachung des Hinweises auf die Patenterteilung: **28.11.2018**
(21) Anmeldenummer: 16713393.3
(22) Anmeldetag: 29.03.2016
(51) Int. Cl.: B61F 5/32, B61H 5/00

(54) **VORRICHTUNG ZUR BEFESTIGUNG VON BREMSEINRICHTUNGEN AN EINEM FAHRWERKSRAHMEN EINES SCHIENENFAHRZEUGES**
DEVICE FOR SECURING BRAKING DEVICES TO A CHASSIS FRAME OF A RAIL VEHICLE
SYSTÈME DE FIXATION DE DISPOSITIFS DE FREINAGE AU CHÂSSIS DE TRAIN DE ROULEMENT D'UN VÉHICULE FERROVIAIRE

(30) Priorität: 30.04.2015 AT 503502015
(43) Veröffentlichungstag der Anmeldung: 06.12.2017
(73) Patentinhaber: Siemens AG Österreich, 1210 Wien (AT)
(72) Erfinder: MOSER, Christian, 8042 Graz (AT); SEIFRIED, Radovan, 2000 Maribor (SI)
(74) Vertreter: Maier, Daniel Oliver
(86) Internationale Anmeldenummer: PCT/EP2016/056750
(87) Internationale Veröffentlichungsnummer: WO 2016/173791

(56) Entgegenhaltungen:
- WO-A1-2011/006795
- DE-C1- 3 930 873
- US-A- 5 462 139

## Beschreibung

### Technisches Gebiet

Die Erfindung betrifft eine Vorrichtung zur Befestigung von Bremseinrichtungen an einem Fahrwerksrahmen eines Schienenfahrzeuges, umfassend einen eine Längsachse aufweisenden Querträger des Fahrwerksrahmens und zumindest zwei Befestigungsstellen für Bremseinrichtungen, wobei die Befestigungsstellen in einer Längenrichtung, welche normal auf die Längsachse steht, von dem Querträger beabstandet sind, sowie einen Fahrwerksrahmen mit einer Vorrichtung zur Befestigung von Bremseinrichtungen.

### Neuer Stand der Technik

Fahrwerke, auch Drehgestelle genannt, von Schienenfahrzeugen weisen in der Regel zwei Radsätze auf, welche auf Schienen geführt sind, und sind mit Wagenkästen des Schienenfahrzeuges verbunden. Ein wesentlicher Bestandteil eines Fahrwerks ist ein Fahrwerksrahmen, an welchem die Radsätze bspw. über eine Radsatzführung bzw. eine Primärfederung und der Wagenkasten bspw. über eine Sekundärfederung und eine Vorrichtung zur Kraftübertragung angebunden sind. Die Kraftflüsse zwischen den einzelnen Komponenten verlaufen dabei hauptsächlich über den Fahrwerksrahmen.

Der Fahrwerksrahmen umfasst in der Regel zwei Längsträger und einen oder mehrere Querträger, wobei die Ausführungsvariante mit einem Querträger als H-Bauform bezeichnet wird. Dabei können die Längsträger auch als mittels Kopfträgern geschlossener Rahmen ausgeführt sein.

Der Querträger ist bei der H-Bauform in der Regel als kastenförmiges Profil ausgebildet und umfasst einen Obergurt, einen Untergurt und zwei Seitenwände, welche jeweils aus einzelnen Blechen bzw. plattenförmigen Metallteilen bestehen.

Die Längsträger sind dabei parallel zu einer Längenrichtung, die der Fahrtrichtung des Schienenfahrzeugs entspricht, angeordnet, wobei eine Längsachse des Querträgers normal auf die Längenrichtung steht.

Um das Schienenfahrzeug abbremsen zu können, weisen die Radsätze in der Regel jeweils zumindest eine Bremsscheibe auf, welche mit einer entsprechenden Bremseinrichtung, vorzugsweise einer Reibbremse, wie einer Kompaktbremszange, zusammenwirken. Befindet sich die Bremseinrichtung im Eingriff mit der Bremsscheibe, so wird die kinetische Energie in Reibungsenergie umgewandelt und so das Schienenfahrzeug verlangsamt bzw. zum Stillstand gebracht. Solche Bremseinrichtungen können einerseits als Betriebsbremsen oder andererseits als Feststellbremsen ausgebildet sein. Zur Befestigung der Bremseinrichtungen sind daher gemäß dem Stand der Technik am Fahrwerksrahmen Befestigungsstellen vorgesehen. Zu diesem Zwecke sind oftmals Konsolen vorgesehen, welche am Querträger angebracht, beispielsweise angeschweißt, sind, über welche die Bremskräfte in den Querträger eingeleitet werden. Durch die hohen zu übertragenden Kräfte ergeben sich in der Regel komplizierte Geometrien für die Konsolen, sodass sich unter anderem ein komplexer Schweißnahtverlauf so wie ein stark erhöhtes Gewicht ergeben.

Eine weitere konstruktive Möglichkeit zur Bereitstellung der Befestigungsstellen für die Bremseinrichtungen stellen Zusatzträger dar, welche parallel zum Querträger, also parallel zur Längsachse, zwischen den Längsträgern verlaufen und an den Längsträgern befestigt sind. Der Nachteil dieser Ausführungsvariante liegt einerseits bei der aufwändigen Anbindung der Zusatzträger an den Längsträgern, andererseits führt eine solche zusätzliche Verbindung zwischen den Längsträgern zu einer Erhöhung der Verwinde-Steifigkeit des Fahrwerksrahmens. Da Verwinde-Steifigkeit und Entgleisungssicherheit einander diametral gegenüber stehen, ist eine Erhöhung der Verwinde-Steifigkeit nicht erwünscht.

Aus dem Stand der Technik ist beispielsweise das US 5,462,139 A bekannt, in welchem ein Bremsträger eines Fahrwerks für ein Schienenfahrzeug offenbart ist. Der Bremsträger ist als Gusskomponente ausgeführt, weist einen H-förmigen Querschnitt auf, umfasst an einem ersten Ende Halte- bzw. Befestigungsvorrichtungen für eine Bremszange und ist über ein zweites Ende mit einem Querträger eines Fahrwerksrahmens verschraubt.

### Aufgabe der Erfindung

Es ist daher eine Aufgabe der Erfindung die Nachteile des Stands der Technik zu überwinden und eine Vorrichtung zur Befestigung von Bremseinrichtungen an einem Fahrwerksrahmen eines Schienenfahrzeuges vorzuschlagen, welche sich durch ein geringes Gewicht, sowie einen reduzierten Fertigungsaufwand auszeichnet und gleichzeitig die Verwinde-Steifigkeit des Fahrwerksrahmens im Vergleich zum Stand der Technik reduziert.

### Darstellung der Erfindung

Diese Aufgabe wird durch eine Vorrichtung zur Befestigung von Bremseinrichtungen mit den Merkmalen des Patentanspruchs 1 gelöst. Vorteilhafte Ausgestaltungen der Erfindung sind in den jeweiligen abhängigen Ansprüchen definiert.

Die Erfindung betrifft eine Vorrichtung zur Befestigung von Bremseinrichtungen an einem Fahrwerksrahmen eines Schienenfahrzeuges, umfassend einen eine Längsachse aufweisenden Querträger des Fahrwerksrahmens und zumindest zwei Befestigungsstellen für Bremseinrichtungen, wobei die Befestigungsstellen in einer Längenrichtung, welche normal auf die Längsachse steht, von dem Querträger beabstandet sind.

Erfindungsgemäß ist dabei vorgesehen, dass jeweils zumindest eine Befestigungsstelle endseitig an einem durchgehenden Bremsträger angeordnet ist, welcher Bremsträger einen offenen Querschnitt aufweist,
wobei Anbindungsmittel vorgesehen sind, über welche der Bremsträger einerseits mit dem Querträger verbunden ist und andererseits in einer Höhenrichtung vom Querträger beabstandet ist. Durch den Bremsträger auf dem die beiden Befestigungsstellen jeweils endseitig angeordnet sind, ist es nunmehr möglich, die Bremseinrichtungen in einfacher Art und Weise am Querträger zu befestigen. Dadurch, dass es sich beim Bremsträger um einen durchgehenden Träger handelt, der sich also von einer ersten Befestigungsstelle auf der einen Seite des Querträgers parallel zur Längenrichtung bis hin zur zweiten Befestigungsstelle auf der anderen Seite des Querträgers ohne Unterbrechung erstreckt, ist die Anzahl der nötigen Verbindungsschweißnähte erheblich reduziert. Diese konzentrieren sich ausschließlich auf die Befestigung der Anbindungsmittel am Querträger bzw. am Bremsträger, da die Anbindungsmittel den einzigen Kontakt zwischen Bremsträger und Querträger darstellen. Durch eine konstruktiv günstige Gestaltung der Anbindungsmittel wird somit der Einfluss der Vorrichtung auf die Verwinde-Steifigkeit des Fahrwerksrahmens minimiert, da somit der durchgehende Bremsträger vom Querträger, im Fall eines kastenförmigen Querschnitts von einem Obergurt des Querträgers, in Höhenrichtung beabstandet ist. Die Höhenrichtung stellt dabei jene Richtung dar, welche durch den Normalvektor von Längenrichtung und Längsachse gebildet wird. Als Beispiele für die Anbindungsmittel sind dabei etwa verschweißte, vernietete oder verschraubte Konsolen oder gelenkige Verbindungen, etwa über Bolzen-Auge Verbindungen bzw. über ballige Lager denkbar.

Durch den offenen Querschnitt des Bremsträgers normal zur Längenrichtung gesehen, lässt sich das Gewicht der Vorrichtung weiter reduzieren. Offene Querschnitte sind beispielsweise I-, U-, H-, Y- oder L-Profile, welche selbstverständlich auch Ausnehmungen zur weiteren Einsparung von Gewicht aufweisen können. Der Bremsträger selbst kann dabei durchgehend aus einem Teil gefertigt sein oder aber abschnittsweise zusammengeschweißt sein, woraus verstärkte Querschnittsstellen zur Aufnahme dieser Schweißnähte resultieren.

Durch den offenen Querschnitt des Bremsträgers lassen sich zumindest alle Schweißnähte, welche zur Herstellung des Bremsträgers nötig sind, nachbehandeln, also beispielsweise blecheben schleifen oder gegenschweißen, wodurch einerseits die Festigkeit steigt und andererseits die Schweißnahtlänge geringer dimensionierbar ist. Üblicher Weise weist der Querträger einen kastenförmigen Querschnitt bezogen auf die Längsachse gesehen auf und umfasst dabei einen Obergurt, einen Untergurt und zwei den Obergurt und den Untergurt verbindende Seitenwände.

Um die Verwinde-Steifigkeit des Querträgers und damit die Verwinde-Steifigkeit des gesamten Fahrwerksrahmens zu reduzieren, ist in einer besonders bevorzugten Ausführungsvariante der Erfindung vorgesehen, dass der Querträger einen Obergurt, einen Untergurt und zwei Seitenwände aufweist, welche Elemente ein kastenförmiges Profil ausbilden und dass der Querträger als Biegeteil ausgebildet ist, wobei zwischen den Seitenwänden und dem Obergurt sowie zwischen den Seitenwänden und dem Untergurt jeweils ein Biegebereich ausgebildet ist. Biegeteile werden in einem Biegeverfahren, auch als Abkantverfahren bekannt, hergestellt, indem sich durch Einleiten eines Biegemoments in einen ebenen Rohkörper, der sogenannten Abwicklung oder Blechabwicklung, der Rohkörper plastisch verformt und so in eine zwei- bzw. dreidimensionale Form gebracht wird. Geeignete Herstellungsverfahren sind beispielsweise das Gesenkbiegen oder das Schwenkbiegen. Jene Bereiche, die plastisch verformt sind, werden als Biegebereiche bezeichnet und zeichnen sich durch einen homogenen und günstigen Spannungsverlauf aus.

Der als Biegeteil ausgebildete Querträger, wobei sich das Biegeteil auch aus mehreren gebogenen Teilstücken zusammen setzen kann, weist daher einen besonders günstigen Spannungsverlauf auf, da statt der Kante zwischen Obergurt und Seitenwand, der Biegebereich den Obergurt und die Seitenwände verbindet. Analoges gilt dementsprechend auch für die Verbindung von Untergurt und Seitenwänden. Die Biegebereiche beziehen sich auf die jeweiligen plastisch verformten, vorzugsweise gekrümmten, Bereiche des Querträgers. Durch den günstigen Spannungsverlauf kann einerseits die Stärke des Blechs, aus dem der Querträger gefertigt ist, reduziert werden und andererseits sind keine Kehlnähte zur Verbindung der Elemente mehr nötig, so dass sowohl Gewicht eingespart wird als auch die Verwinde-Steifigkeit gesenkt wird.

Eine weitere besonders bevorzugte Ausführungsvariante der Erfindung sieht vor, dass der Querträger zumindest am Obergurt und am Untergurt eine Gurtöffnung aufweist, wobei zumindest eine der Gurtöffnungen zumindest 50% der Fläche des Obergurts bzw. des Untergurts einnimmt. Durch die relativ große Gurtöffnung wird die Verwinde-Steifigkeit des Querträgers noch weiter gesenkt, um eine stark verbesserte Entgleisungssicherheit des Schienenfahrzeuges zu erreichen. Nimmt auch die jeweils andere Gurtöffnung mindestens 35% der Fläche des jeweiligen Elements ein, so ergibt sich eine weitere Verstärkung des Effekts. Es können dabei auch an den Seitenwänden weitere Gurtöffnungen vorgesehen sein, um das Gewicht zu reduzieren und die Verwinde-Steifigkeit zu verringern.

Da bei verwindeweichen Querträgern die Einleitung von den Bremskräften, die sich als Querkräfte darstellen, zu einer Torsion des Querträgers führt, welche insbesondere die hochbelasteten Schweißnähte an den Anbindungsstellen zwischen Längsträgern und Querträgern zusätzlich beanspruchen, ist in einer weiteren Ausführungsvariante einer erfindungsgemäßen Vorrichtung vorgesehen, dass jedes Anbindungsmittel mit einer Seitenwand des Querträgers verbunden ist. Insbesondere wenn der Querträger Gurtöffnungen aufweist und damit einen offenen Querschnitt, verschiebt sich der Schubmittelpunkt, wie aus der Festigkeitslehre bekannt, vom Inneren des Querträgers auf die Außenseite des Querträgers, sodass die Verbindung der Anbindungsmittel im Bereich der Seitenwände zu einer Einleitung der Bremskräfte in den Querträger im Bereich des Schubmittelpunkts führt. Eine solche Krafteinleitung, die bevorzugt im Schubmittelpunkt selbst stattfindet, führt, ebenfalls nach einem bekannten Prinzip der Festigkeitslehre, zu einer torsionsfreien Biegebelastung des Querträgers. Es versteht sich dabei von selbst, dass die Gestaltung des Querträgers als Biegeteil zwar vorteilhaft für diese Ausführungsform der Erfindung ist, jedoch lediglich das Vorhandensein eines kastenförmigen Querschnitts mit Obergurt, Untergurt und insbesondere Seitenwänden eine zwingende Bedingung darstellt. Demgemäß sind auch Ausführungsvarianten mit kastenförmigem Querträger denkbar, bei dem der Querträger nicht als Biegeteil ausgebildet ist. Dieser Umstand gilt für alle nachfolgenden Ausführungsvarianten gleichermaßen.

In einer alternativen Ausführungsvariante der Erfindung ist vorgesehen, dass das Anbindungsmittel ein mit dem Querträger verbundenes Gelenk sowie ein mit dem Bremsträger verbundenes Distanzelement umfasst, um eine gelenkige Verbindung zwischen Bremsträger und Querträger herzustellen. Insbesondere wenn der Bremsträger über zumindest ein Paar Gelenke bzw. Distanzelemente mit dem Querträger verbunden ist, wobei jeweils ein Anbindungsmittel in Längenrichtung gesehen vor und eines hinter dem Querträger angeordnet ist, also mit anderen Worten, wenn an jeder Seitenwand zumindest ein Anbindungsmittel angeordnet ist, so werden die Bremskräfte als Kräftepaar in den Querträger eingeleitet. Dementsprechend weist das Distanzelement beispielsweise endseitig ein Auge auf, durch das ein Bolzen geführt ist, welcher Gelenk und Distanzelement gelenkig miteinander verbindet.

Um den Effekt der reinen Biegung bei einer Krafteinleitung im Schubmittelpunkt auszunützen, sieht eine weitere alternative Ausführungsvariante einer erfindungsgemäßen Vorrichtung zur Befestigung von Bremseinrichtungen vor, dass das Gelenk im Schubmittelpunkt des Querträgers angeordnet ist. Da durch die gelenkige Verbindung des Bremsträgers mit dem Querträger die Bremskräfte in einem definiertem Punkt, nämlich im Gelenk, eingeleitet werden, lässt sich die Krafteinleitung im Schubmittelpunkt des Querträgers, in einfacher Art und Weise bewerkstelligen, indem das Gelenk selbst über konstruktive Mittel, etwa Konsolen oder ähnliches, im Schubmittelpunkt des Querträgers angeordnet ist. Der Begriff Schubmittelpunkt bezieht sich dabei auf den Schubmittelpunkt jenes Querschnitts des Querträgers, wobei der Querschnitt normal zur Längsachse betrachtet wird, an welchem die Anbindungsmittel, also Gelenk und Distanzelement, angeordnet sind.

Gemäß einer bevorzugten Ausführungsvariante der Erfindung umfasst das Anbindungsmittel zumindest eine normal zur Längsachse ausgerichtete Konsole, welche einen ersten Verbindungsabschnitt der mit dem Querträger verbunden ist und einen zweiten Verbindungsabschnitt der mit dem Bremsträger verbunden ist aufweist, und sind die Verbindungsabschnitte mit Querträger bzw. Bremsträger verschweißt. Konsolen stellen eine besonders gewichtsparende konstruktive Maßnahme zur Anbindung des Bremsträgers dar, da es sich in der Regel bei den Konsolen um plattenartige Teile oder Bleche, vorzugsweise aus Metall bzw. Stahl, handelt, welche ein geringes Gewicht bezogen auf die Biegefestigkeit aufweisen. Die Konsolen liegen jeweils in einer Ebene, deren Normalvektor parallel zur Längsachse des Querträgers ausgerichtet ist. Dabei ist in der Regel an jeder Seitenwand des Querträgers zumindest eine Konsole, vorzugsweise zwei, angeschweißt. Durch die ebene Bauform der Konsolen, deren Dicke im Bezug zu den Längen- und Breitenabmessungen also klein ist, ist auch die Anbringung bzw. Nachbehandlung, etwa das Blechebenschleifen oder Gegenschweißen, von den Schweißnähten an den Verbindungsabschnitten mit relativ geringem Aufwand, verglichen mit Lösungen gemäß dem Stand der Technik, möglich. Durch die Nachbearbeitung der Schweißnähte wird die Festigkeit der Schweißnähte, insbesondere die Ermüdungsfestigkeit, erhöht, ebenso ist die Verwendung von hochfesten Blechen dadurch ermöglicht, sodass insgesamt die Stärke der Bleche sowie die Länge der Schweißnähte reduziert werden können, um eine weitere Reduktion des Gewichts der Vorrichtung und damit des Fahrwerksrahmens zu erreichen.

Zur Verlängerung der Schweißnaht im ersten Verbindungsabschnitt sieht eine weitere bevorzugte Ausführungsvariante der Vorrichtung vor, dass der erste Verbindungsabschnitt C-förmig und am Querträger anliegend ausgebildet ist, sodass der erste Verbindungsabschnitt die Seitenwand des Querträgers zur Gänze umgreift. Durch die C-Form des Verbindungsabschnitts, der durch eine Ausnehmung in der Konsole gebildet ist, liegt der erste Verbindungsabschnitt an der langen Kante der C-Form, vorzugsweise vollflächig, an der Seitenwand des Querträgers an. Die kurzen Kanten der C-Form kontaktieren dabei zumindest abschnittsweise den Obergurt bzw. den Untergurt des Querträgers, wobei allenfalls auch die etwaig gebildeten Biegebereiche zwischen Seitenwand und Obergurt bzw. zwischen Seitenwand und Untergurt vom ersten Verbindungsabschnitt umfasst und kontaktiert werden. Somit umgreift der erste Verbindungsabschnitt den Querträger klammerartig und ermöglicht die Anbringung langer ununterbrochener Schweißnähte, sowie eine günstige Krafteinleitung der Bremskräfte in den Querträger. Es versteht sich dabei von selbst, dass die Konsole auf der Außenseite der Seitenwand des Querträgers angeordnet ist, also jener Seite, deren Normalvektor von der Längsachse wegzeigt.

In einer weiteren bevorzugten Ausführungsvariante einer erfindungsgemäßen Vorrichtung ist vorgesehen, dass der zweite Verbindungsabschnitt einen spitzen Winkel mit einer durch Längenrichtung und Längsachse aufgespannten Ebene einschließt, wobei der gedachte Schnittpunkt zwischen der Verlängerung des zweiten Verbindungsabschnitts und der Ebene auf der von der Längsachse abgewandten Seite der Seitenwand angeordnet ist. Damit die Schweißnähte in einfacher Weise gefertigt werden können verläuft der zweite Verbindungsabschnitt in der Regel geradlinig, es ist jedoch auch ein gekrümmter Verlauf denkbar, wobei sich bei einem gekrümmten Verlauf die Verlängerung des zweiten Verbindungsabschnitts auf die gedachte Gerade zwischen Anfangs- und Endpunkt des zweiten Verbindungsabschnitts bezieht. Durch die Schräge des zweiten Verbindungsabschnitts, die durch den spitzen Winkel eingestellt ist, wird einerseits eine günstige Krafteinleitung vom Bremsträger in die Konsole erreicht, insbesondere werden die Wirkungslinien der Kräfte zumindest teilweise durch den Schubmittelpunkt des Querträgers gelenkt, und andererseits die Länge der Schweißnaht im zweiten Verbindungsabschnitt erhöht. Es ist jedoch genauso denkbar, dass der zweite Verbindungsabschnitt, sofern genügend Bauraum zur Verfügung steht und die Länge der im zweiten Verbindungsabschnitt angebrachten Schweißnaht nicht durch eine Schrägstellung vergrößert werden muss, in einer alternativen Ausführungsvariante horizontal, also normal zur Höhenrichtung bzw. parallel zu Längsachse und Längenrichtung, verläuft. Der zweite Verbindungsabschnitt ist dabei in Höhenrichtung gesehen - bei schräger Anordnung zumindest abschnittsweise - oberhalb jener Ebene angeordnet, welche durch Längenrichtung und Längsachse gebildet wird. Vorzugsweise ist der zweite Verbindungsabschnitt dabei im Bereich des Obergurts des Querträgers angeordnet, also in Höhenrichtung von der Längsachse, vorzugsweise um zumindest die Hälfte des Abstands zwischen Obergurt und Untergurt in Höhenrichtung gemessen, beabstandet.

Eine besonders bevorzugte Ausführungsvariante einer erfindungsgemäßen Vorrichtung zur Befestigung von Bremseinrichtungen sieht vor, dass der Bremsträger zwei Seitenelemente und einen die beiden verbindenden Steg umfasst, wobei der Bremsträger in Längenrichtung gesehen einen im Wesentlichen H-förmigen Querschnitt aufweist. Die beiden Seitenelemente, die als Bleche, vorzugsweise aus Metall bzw. Stahl, ausgebildet sind, ermöglichen eine konstruktiv einfache Gestaltung der Befestigungsstellen, außerdem lässt sich dadurch beispielsweise der mit dem zweiten Verbindungsabschnitt der Konsolen verbundene Abschnitt über eine Stumpfnaht mit den Konsolen verschweißen. Unter H-förmigem Querschnitt, wird dabei verstanden, dass sich die Seitenwände ausgehend vom Steg parallel zur Höhenrichtung zu beiden Seiten des Stegs erstrecken. Der Verlauf des Stegs kann dabei beispielsweise durchgehend geradlinig oder abschnittsweise schräg oder gekrümmt sein. Durch den H-förmigen Querschnitt des Bremsträgers kann so einerseits das Gewicht reduziert werden und andererseits ist die Fertigung und Nachbearbeitung der die Seitenelemente und den Steg verbindenden Schweißnähte möglich.

Um eine gleichmäßige Einleitung der Bremskräfte in den Querträger ausschließlich über die Anbindungsmittel zu erreichen und dabei den Bauraum zwischen Querträger und Radachsen, an denen Bremsscheiben für das Zusammenwirken mit den Bremseinrichtungen angeordnet sind, zu überbrücken, ist in einer weiteren besonders bevorzugten Ausführungsvariante der Erfindung vorgesehen, dass der Bremsträger zwei auskragende Abschnitte und einen die beiden auskragenden Abschnitte verbindenden Zentralabschnitt umfasst, wobei sich die auskragenden Abschnitte jeweils von einer Seitenwand des Querträgers parallel zur Längenrichtung nach außen erstrecken und der Zentralabschnitt den Querträger in Längenrichtung überbrückt.

Damit der Abstand zwischen Bremsträger und Querträger, beispielsweise zwischen der dem Obergurt am nächsten liegenden Punkt des Zentralabschnitts und eben dem Obergurt, herstellbar ist, sind die Anbindungsmittel derart gestaltet, dass ein Mindestabstand in Höhenrichtung, beispielsweise 50 mm, 100 mm oder 200 mm, zwischen Bremsträger und Querträger nicht unterschritten wird. Konstruktiv umfassen die Anbindungsmittel daher, im Falle von Konsolen, neben den Konsolen selbst auch konsolenartige Abschnitte der Seitenelemente des Querträgers, welche in Richtung der Konsolen von den Seitenelementen abstehen, sodass über die Dimensionierung von Konsolen und konsolenartigen Abschnitten die Einhaltung des Mindestabstands sicher gestellt ist. Denkbar ist dabei jedwede Aufteilung zwischen konsolenartigen Abschnitten und Konsolen selbst denkbar, jedoch ist es aus fertigungstechnischen Gründen günstiger, wenn der größere Teil, zwischen 65% und 90%, durch die Konsolen übernommen wird. Gleichwohl ist eine solche Aufteilung auch zwischen konsolenartigen Abschnitten und Distanzelementen in gleicher Weise denkbar. Daher sieht eine weitere besonders bevorzugte Ausführungsvariante der Erfindung vor, dass das Anbindungsmittel konsolenartige Abschnitte der Seitenelemente zur Verbindung mit den zweiten Verbindungsabschnitten umfasst, welche konsolenartigen Abschnitte jeweils in den auskragenden Abschnitten des Bremsträgers, auf der dem Querträger zugewandten Seite der Seitenelemente, angeordnet sind.

Die Erfindung betrifft auch einen Fahrwerksrahmen mit einer erfindungsgemäßen Vorrichtung zur Befestigung von Bremseinrichtungen, umfassend zwei Längsträger, sowie einen die beiden Längsträger verbindenden Querträger, wobei zwei Bremsträger mit offenem Querschnitt über Anbindungsmittel mit dem Querträger verbunden sind, und wobei jeder Bremsträger in Längenrichtung jeweils endseitig eine Befestigungsstelle für Bremseinrichtungen aufweist. Da in der Regel eine Radachse des Schienenfahrzeugs mit zumindest zwei Bremsscheiben versehen ist, welche jeweils mit einer Bremseinrichtung zusammenwirken, sind zwei Bremsträger vorgesehen, sodass insgesamt zumindest vier Befestigungsstellen für Bremseinrichtungen, jeweils eine pro auskragendem Abschnitt und damit zwei pro Radachse, zur Verfügung stehen. Da die Bremsträger nicht mit den Längsträgern verbunden sind, sondern nur über die Anbindungsmittel am Querträger angebunden sind, ist die Verwinde-Steifigkeit des Fahrwerksrahmens durch die erfindungsgemäße Vorrichtung nicht negativ beeinflusst.

Eine weitere Ausführungsvariante eines erfindungsgemäßen Fahrwerksrahmens sieht vor, dass die Anbindungsmittel eines Bremsträgers vier konsolenartige Abschnitte und vier Konsolen umfassen, wobei jeweils der erste Verbindungsabschnitt einer Konsole mit einer Seitenwand des Querträgers und der zweite Verbindungsabschnitt mit einem konsolenartigen Abschnitt eines Seitenelements des Bremsträgers verbunden ist. Dabei sind jeweils zwei Konsolen an einer Seitenwand des Querträgers, voneinander in einer Richtung parallel zur Längsachse beabstandet, angeschweißt, sodass jedes Seitenelement des Bremsträgers in Längenrichtung gesehen jeweils vor und hinter dem Querträger an einem konsolenartigen Abschnitt mit einer Konsole verschweißt ist. Die Bremsträger sind in einer Richtung parallel zur Längsachse des Querträgers voneinander beabstandet, wobei der Abstand zwischen den Bremsträgern etwa doppelt so groß ist wie der Abstand zwischen Bremsträger und dem nächstliegenden Längsträger. Dadurch wird eine gleichmäßige Einleitung der Bremskräfte in den Querträger erreicht, wobei das Gesamtgewicht des Fahrwerksrahmens gegenüber dem Stand der Technik deutlich reduziert ist.

Um zumindest eine, vorzugsweise zwei, weitere Befestigungsstellen für Bremseinrichtungen zu schaffen, beispielsweise wenn drei Bremsscheiben pro Radachse vorgesehen sind, ist in einer weiteren bevorzugten Ausführungsvariante der Erfindung vorgesehen, dass zumindest ein, vorzugsweise zwei, Zusatzträger, der parallel zur Längsachse des Querträgers ausgerichtet ist, vorgesehen ist, welcher Zusatzträger zwei auskragende Abschnitte der beiden Bremsträger verbindet, wobei der Zusatzträger eine weitere Befestigungsstelle für eine Bremseinrichtung aufweist. In der Regel ist dabei auf jeder Seite des Querträgers ein Zusatzträger vorgesehen, sodass jeweils die zwei ersten auskragenden Abschnitte und die zwei zweiten auskragenden Abschnitte der beiden Bremsträger über einen Zusatzträger miteinander verbunden sind. Um die Hebelwirkung zu verringern, ist der Zusatzträger dabei in der Regel in Längenrichtung gesehen näher an den Befestigungsstellen als am Querträger selbst angeordnet. Bei dem Zusatzträger kann es sich beispielsweise um ein Rohr handeln, welches durch Aufnahmeöffnungen in den Seitenelementen der Bremsträger geführt und in den Aufnahmeöffnungen verschweißt ist.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine Seitenansicht einer Ausführungsvariante einer erfindungsgemäßen Vorrichtung;
- Fig. 2: eine axonometrische Ansicht der Vorrichtung von schräg oben gesehen;
- Fig. 3: eine axonometrische Ansicht der Vorrichtung von schräg unten gesehen;
- Fig. 4: eine axonometrische Ansicht einer Ausführungsvariante eines erfindungsgemäßen Fahrwerksrahmens mit zwei Bremsträgern;
- Fig. 5: eine axonometrische Ansicht einer weiteren Ausführungsvariante eines erfindungsgemäßen Fahrwerksrahmens mit zwei Bremsträgern;
- Fig. 6: eine Prinzip Darstellung einer alternativen Ausführungsvariante einer erfindungsgemäßen Vorrichtung.

### Ausführung der Erfindung

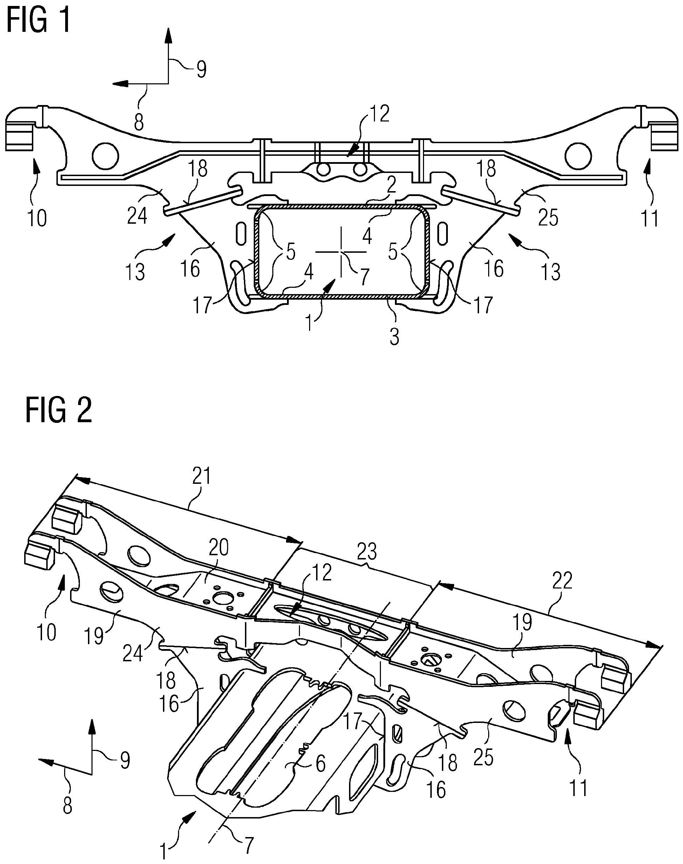

Figur 1 zeigt eine Ausführungsvariante einer Vorrichtung zur Befestigung von Bremseinrichtungen an einem Fahrwerksrahmen eines Schienenfahrzeugs. Die Vorrichtung umfasst dabei einen Querträger 1 mit einer Längsachse 7, welcher Querträger 1 die beiden Längsträger (nicht dargestellt) des Fahrwerksrahmens verbindet. Der Querträger 1 weist einen kastenförmigen Querschnitt auf, der in einer Ebene normal zur Längsachse 7 liegt und durch einen Obergurt 2, einen Untergurt 3 und zwei diese verbindende Seitenwände 4 gebildet ist. Der Querträger 1 ist dabei im vorliegenden Ausführungsbeispiel als Biegeteil gestaltet, in anderen Worten wurde der Querträger 1 aus einem ebenen Blech mittels eines geeigneten Biegeverfahrens gebogen, sodass an den Übergängen zwischen Obergurt 2 und den Seitenwänden 4 bzw. zwischen dem Untergurt 3 und den Seitenwänden 4 Biegebereiche 5 ausgebildet sind, die aus der plastischen Verformung des ebenen Rohkörpers resultieren. Im Querschnitt weisen diese Biegebereiche 5 einen viertelkreis-förmigen Radius auf.

Zur Aufnahme der Bremseinrichtungen weist die Vorrichtung eine erste Befestigungsstelle 10 und eine zweite Befestigungsstelle 11 auf, die in einer Längenrichtung 8 gesehen, welche normal auf die Längsachse 7 steht und im Wesentlichen der Fahrtrichtung des Schienenfahrzeugs entspricht, vom Querträger 1 beabstandet sind, sodass die erste Befestigungsstelle 10 bezogen auf die Längsachse 7 auf der einen Seite und die zweite Befestigungsstelle 11 auf der anderen Seite des Querträgers 1 angeordnet ist. Die beiden Befestigungsstellen 10, 11 sind dabei auf einem Bremsträger 12 angebracht, welcher in Bezug auf die Längsachse 7 oberhalb des Querträgers 1 angeordnet ist und sich in Längenrichtung 8, parallel zu den Längsträgern, erstreckt. Der Bremsträger 12 ist dabei durchgehend ausgebildet, sodass der Kraftfluss im Bremsträger 12 über die gesamten Länge des Bremsträgers 12 in Längenrichtung 8 gesehen, zwischen den beiden Befestigungsstellen 10,11 nicht unterbrochen ist.

Zur Anbindung des Bremsträgers 12 an den Querträger 1 sind Anbindungsmittel 13 vorgesehen, welche einerseits die Einleitung der Bremskräfte vom Bremsträger 12 in den Querträger 1 und andererseits einen Abstand in Höhenrichtung 9 zwischen Bremsträger 12 und Querträger 1 sicherstellen. Die Höhenrichtung 9 steht dabei normal auf eine von Längenrichtung 8 und Längsachse 7 aufgespannte Ebene, sodass sich ein orthogonales Koordinatensystem bildet. Die Anbindungsmittel 13 sind jeweils mit einer Seitenwand 4 verbunden, sodass der Bremsträger 12 über zumindest zwei Anbindungsmittel 13 mit dem Querträger 1 verbunden ist, welche bezogen auf die Längenrichtung 8 auf beiden Seiten des Querträgers 1, symmetrisch zu einer durch Höhenrichtung 9 und Längsachse 7 gebildeten Symmetrieebene angeordnet sind.

Die Anbindungsmittel 13 sind dabei im vorliegenden Ausführungsbeispiel als Konsolen 16 und konsolenartige Abschnitte 24,25 des Bremsträgers 12 ausgebildet, welche als Schweißkonstruktion den Bremsträger 12 mit dem Querträger 1 verbinden.

Die Konsole 16 besteht aus einem Blech aus Metall, beispielsweise Stahl, welches eben ist und dessen Dicke in Bezug auf die anderen Abmessungen gering ist. Zur Verbindung mit dem Querträger 1 weist die Konsole einen ersten Verbindungsabschnitt 17 auf, welcher eine Seitenwand 4 des Querträgers 1 klammerartig umgreift. Dazu ist der erste Verbindungsabschnitt 17 C-förmig ausgebildet, sodass die lange Kante der C-Form die Seitenwand 4 des Querträgers 1 vollflächig kontaktiert. Die kurzen Enden der C-Form kontaktieren dabei den jeweiligen Biegebereich 5 und einen an den Biegebereich 5 anschließenden Abschnitt des Obergurts 2 bzw. des Untergurts 3. Durch die spezifische Gestaltung des ersten Verbindungsabschnitts 17 ist eine lange durchgehende Schweißnaht zur Verbindung von Querträger 1 und Konsole 16 anbringbar.

Zur Verbindung der Konsole 16 mit dem Bremsträger 12, weist die Konsole 16 einen zweiten Verbindungsabschnitt 18 auf, der mit den konsolenartigen Abschnitten 24,25 verschweißt ist. Die Konsole 16 umfasst dabei neben einem ersten Element, das den C-förmigen ersten Verbindungsabschnitt 17 ausbildet, ein weiteres Element, welches sich vom ersten Element schräg in Richtung der konsolenartigen Abschnitte 24,25 erstreckt, sodass sich eine im Wesentlichen trapezförmige Gestalt des weiteren Elements ergibt, die sich in den jeweiligen konsolenartigen Abschnitt 24,25 verlaufend fortsetzt. Das weitere Element der Konsole 16 bildet dabei den zweiten Verbindungsabschnitt 18 aus, welcher in Richtung der Längsachse 7 gesehen einen geradlinigen Verlauf aufweist. Die gedachten Verlängerungen der zweiten Verbindungsabschnitte 18 der beiden Konsolen 16 schneiden einander in der Symmetrieebene und bilden eine Dachform aus, anders gesagt, schneiden die Verlängerungen der zweiten Verbindungsabschnitte 18 eine von Längsachse 7 und Längenrichtung 8 aufgespannte Ebene außerhalb des Querträgers 1, also in Bezug auf die jeweilige Seitenwand 4 auf der der Längsachse 7 abgewandten Seite.

In Figur 2 ist deutlich zu erkennen, dass der Bremsträger 12 normal zur Längenrichtung 8 gesehene einen offenen Querschnitt aufweist, nämlich einen H-förmigen Querschnitt. Dementsprechend umfasst der Bremsträger 12 einen Steg 20, der im Wesentlichen parallel zu Obergurt 2 und Untergurt 3 verläuft, und zwei den Steg 20 beidseitig überragende Seitenelemente 19, welche parallel zur Höhenrichtung 9 ausgerichtet sind und vorzugsweise einen rechten Winkel mit dem Steg 20 einschließen. Der Bremsträger 12 ist in einen Zentralabschnitt 23, welcher oberhalb des Obergurts 2 angeordnet ist, und zwei auskragende Abschnitte 21,22 unterteilt, wobei der erste auskragende Abschnitt 21 sich vom Zentralabschnitt 23 über die auf der einen, beispielsweise der linken, Seitenwand 4 angebrachte Konsole 16 parallel zur Längenrichtung 8 erstreckt, den ersten konsolenartigen Abschnitt 24 und endseitig die erste Befestigungsstelle 10 aufweist. Der zweite auskragende Abschnitt 22 erstreckt sich analog dazu über die auf der anderen, beispielsweise der rechten, Seitenwand 4 angebrachte Konsole 16 und weist den zweiten konsolenartigen Abschnitt 25 sowie die zweite Befestigungsstelle 11 auf. Der Steg 20 verläuft dabei im Bereich der Befestigungsstellen 10,11 in Höhenrichtung 9 gesehen näher am Obergurt 2 als im Zentralabschnitt 23, wobei eine Übergangsschräge zwischen den beiden Bereichen vorgesehen ist, in der der Steg 20 nicht parallel zum Obergurt 2 verläuft. Die Abschnitte 21,22,23 des Bremsträgers 12 sind jeweils über Schweißnähte miteinander verbunden, wobei auch eine einstückige Ausführung, also ein durchgehender Steg 20 mit durchgehenden Seitenelementen 19, denkbar wäre.

Die konsolenartigen Abschnitte 24,25 werden von den Seitenelementen 19 des Bremsträgers 12 ausgebildet und sind über Schweißnähte mit dem zweiten Verbindungsabschnitt 18 der Konsolen 16 verbunden. Konsolen 16 und konsolenartige Abschnitte 24,25 sind dabei derart dimensioniert, dass der Bremsträger 12 in Höhenrichtung vom Obergurt 2 des Querträgers 1 beabstandet ist und nur über die Anbindungsmittel 13, also Konsolen 16 und konsolenartige Abschnitte 24,25, mit dem Querträger 1 verbunden ist, also nicht etwa auf diesem aufliegt. Während die Konsolen 16 im vorliegenden Fall den Großteil des Abstands zwischen Längsachse 7 und Bremsträger 12 parallel zur Höhenrichtung 9 überbrücken, da der zweite Verbindungsabschnitt 18 in Höhenrichtung 9 gesehen bereits oberhalb des Obergurts 2 angeordnet ist, ist es in alternativen Ausführungsvarianten denkbar, dass der Abstand zwischen zweitem Verbindungsabschnitt 18 und Längsachse 7 in Höhenrichtung 9 gesehen wesentlich geringer ist und dementsprechend die konsolenartige Abschnitte 24,25 den Großteil des Abstands überbrücken.

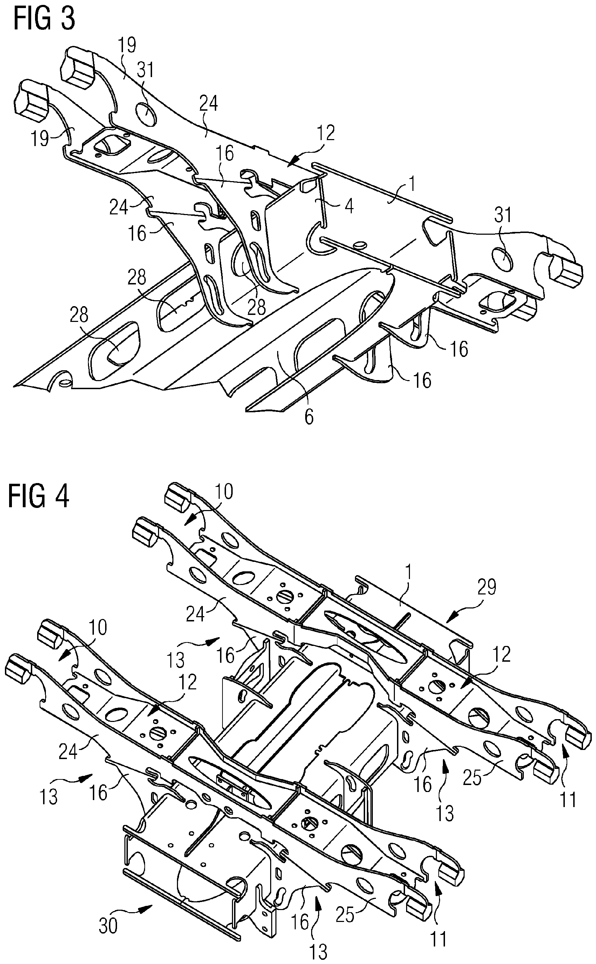

Ebenfalls zu erkennen ist in Figur 2, dass der Obergurt 2 des Querträgers 1 eine Gurtöffnung 6 aufweist, welche etwa 35% der Fläche des Obergurts 2 einnimmt. Auch der Untergurt 3 weist eine Gurtöffnung 6 auf, die etwa 60% der Fläche des Untergurts 3 einnimmt (siehe auch Figur 3). Durch diese Gurtöffnungen 6 wird einerseits das Gewicht des Querträgers 1 reduziert und andererseits ein offener Querschnitt des Querträgers 1 erreicht. Der Schubmittelpunkt eines offenen Querschnitts liegt im vorliegenden Fall nach den Regeln der Festigkeitslehre außerhalb des Querträgers 1 selbst, im Bereich der Konsolen 16. Dadurch wird ein Teil der über den Bremsträger 12 eingeleiteten Bremskräfte über die Konsole 16 im Schubmittelpunkt des Querschnitts des Querträgers 1 eingeleitet, sodass die Torsionsbelastung des Querträgers 1 sinkt.

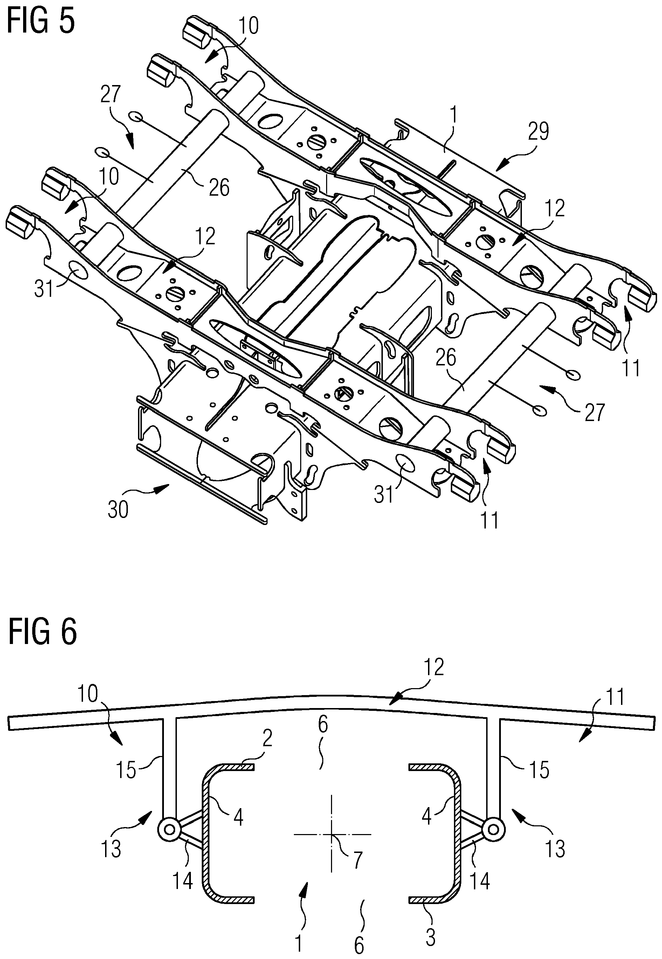

In Figur 3 ist deutlich die Gurtöffnung 6 im Untergurt 3 zu erkennen, die eine ellipsenförmige Form aufweist. Ebenfalls gekennzeichnet sind Aufnahmeöffnungen 31 für einen Zusatzträger 26 (siehe Figur 5), welche eine kreisrunde Form aufweisen und in den Seitenelementen 19 des Bremsträgers 12 angeordnet sind. Die Seitenwände 4 des Querträgers 1 weisen weitere Gurtöffnungen 28 auf, wobei die Konsolen 16 jeweils zwischen zwei weiteren Gurtöffnungen 28 angeordnet sind, damit die Seitenwand 4 über den gesamten ersten Verbindungsabschnitt 17 (siehe Figuren 1 und 2) von der Konsole 16 kontaktiert ist. An einer Seitenwand 4 sind demnach jeweils zwei Konsolen 16 angebracht, die im abgebildeten Fall mit zwei ersten konsolenartigen Abschnitten 24 der Seitenelemente 19 des Bremsträgers 12 verschweißt sind. Dementsprechend sind auch auf der anderen Seitenwand 4 zwei Konsolen 16 gleichermaßen angeordnet, wobei die zweiten konsolenartigen Abschnitte 25 vom Querträger 1 in dieser Abbildung überdeckt sind.

Figur 4 zeigt einen Fahrwerksrahmen mit einer erfindungsgemäßen Vorrichtung zur Befestigung von Bremseinrichtungen, wobei der Querträger 1 zwei, nicht dargestellte, Längsträger verbindet. Der Übersicht halber wurde auf die Darstellung der Längsträger verzichtet, lediglich eine erste und zweite Anschlussstelle 29,30 zum Anschluss der Längsträger sind gekennzeichnet. Um Bremseinrichtungen für eine Radachse mit mehreren Bremsscheiben zur Verfügung zu stellen, sind in diesem Ausführungsbeispiel zwei Bremsträger 12 über die zuvor beschriebenen Anbindungsmittel 13, also im vorliegen Fall über jeweils vier Konsolen 16 und vier entsprechende erste bzw. zweite konsolenartige Abschnitte 24,25 der Bremsträger 12, am Querträger 1 angebunden. Jeder der Bremsträger 12 weist dabei eine erste und eine zweite Befestigungsstelle 10,11 auf, wodurch insgesamt vier Bremseinrichtungen am Fahrwerksrahmen befestigtbar sind. Die Bremsträger 12 sind dabei in einer Richtung parallel zur Längsachse 7 des Querträgers 1, voneinander beabstandet, wobei der Abstand zwischen den einander zuweisenden Seitenelementen 19 der Bremsträgern 12 etwa doppelt so groß ist wie der Abstand zwischen den in die Gegenrichtung weisenden Seitenelementen 19 und den Anschlussstellen 29,30. Die Bremsträger 12 sind dabei symmetrisch zu einer normal auf die Längsachse 7 stehenden weiteren Symmetrieebene angeordnet, wobei die weitere Symmetrieebene im Mittelpunkt des Querträgers 1 bezogen auf die Erstreckung parallel zur Längsachse 7 aufgespannt ist.

In Figur 5 ist eine weitere Ausführungsvariante eines Fahrwerksrahmens abgebildet, bei der durch die, bereits in Figur 3 erwähnten, Aufnahmeöffnungen 31 in den Seitenelementen 19 der Bremsträger 12 jeweils ein Zusatzträger 26 geführt ist, welcher Zusatzträger 26 jeweils zwei erste auskragende Abschnitte 21 und zwei zweite auskragende Abschnitte 22 miteinander verbindet. Die Zusatzträger 26 sind dabei parallel zur Längsachse 7 des Querträgers 1 ausgerichtet und weisen jeweils in einer Richtung parallel zur Längsachse 7 gesehen mittig eine weitere Befestigungsstelle 27 auf, um eine Bremseinrichtung für eine dritte Bremsscheibe des Radsatzes aufnehmen zu können. Ebenfalls denkbar wäre gleichermaßen beispielsweise das Vorsehen von vier oder mehr Befestigungsstellen.

Figur 6 zeigt eine alternative Ausführungsvariante der Erfindung. Dabei sind die Anbindungsmittel 13 als ein Gelenk 14, welches an jeweils einer Seitenwand 4 des Querträgers 1 befestigt ist, und ein Distanzelement 15, beispielsweise ein Träger oder eine weitere Konsole oder ein weiterer konsolenartiger Abschnitt, welches am Bremsträger 12 befestigt ist, ausgebildet. Der Querträger 1 ist dabei als zwei C-förmige Teilstücke dargestellt, da im betrachteten Querschnitt die Gurtöffnungen 6 in Obergurt 2 und Untergurt 3 ein geöffnetes Profil des Querträgers 1 bewirken. Der Schubmittelpunkt eines solchen offenen Querschnitts liegt außerhalb des Querträgers 1 selbst, daher sind die Gelenke 14 im Schubmittelpunkt des offenen Querschnitts angeordnet, sodass die über Bremsträger 12 und Distanzelemente 15 in die Gelenke 14 eingeleiteten Bremskräfte eine torsionsfreie Biegung des Querträgers 1 nach den bekannten Prinzipien der Festigkeitslehre zur Folge haben.

### Bezugszeichenliste:

- 1: Querträger
- 2: Obergurt
- 3: Untergurt
- 4: Seitenwände
- 5: Biegebereich
- 6: Gurtöffnung
- 7: Längsachse
- 8: Längenrichtung
- 9: Höhenrichtung
- 10: erste Befestigungsstelle
- 11: zweite Befestigungsstelle
- 12: Bremsträger
- 13: Anbindungsmittel
- 14: Gelenk
- 15: Distanzelement
- 16: Konsole
- 17: erster Verbindungsabschnitt
- 18: zweiter Verbindungsabschnitt
- 19: Seitenelemente des Bremsträgers 12
- 20: Steg des Bremsträgers 12
- 21: erster auskragender Abschnitt des Bremsträgers 12
- 22: zweiter auskragender Abschnitt des Bremsträgers 12
- 23: Zentralabschnitt des Bremsträgers 12
- 24: erster konsolenartiger Abschnitt des Bremsträgers 12
- 25: zweiter konsolenartiger Abschnitt des Bremsträgers 12
- 26: Zusatzträger
- 27: weitere Befestigungsstelle
- 28: weitere Gurtöffnungen
- 29: erste Anschlussstelle
- 30: zweite Anschlussstelle
- 31: Aufnahmeöffnung für den Zusatzträger 26

## Patentansprüche

1. Vorrichtung zur Befestigung von Bremseinrichtungen an einem Fahrwerksrahmen eines Schienenfahrzeuges, umfassend einen eine Längsachse (7) aufweisenden Querträger (1) des Fahrwerksrahmens und zumindest zwei Befestigungsstellen (10,11) für Bremseinrichtungen, wobei die Befestigungsstellen (10,11) in einer Längenrichtung (8), welche normal auf die Längsachse (7) steht, von dem Querträger (1) beabstandet sind,
**dadurch gekennzeichnet, dass**
jeweils zumindest eine Befestigungsstelle (10,11) endseitig an einem durchgehenden Bremsträger (12) angeordnet ist, welcher Bremsträger (12) einen offenen Querschnitt aufweist,
wobei Anbindungsmittel (13) vorgesehen sind, über welche der Bremsträger (12) einerseits mit dem Querträger (1) verbunden ist und andererseits in einer Höhenrichtung (9) vom Querträger (1) beabstandet ist.

2. Vorrichtung nach Anspruch 1, **dadurch gekennzeichnet, dass** der Querträger (1) einen Obergurt (2), einen Untergurt (3) und zwei Seitenwände (4) aufweist, welche Elemente (2,3,4) ein kastenförmiges Profil ausbilden und dass der Querträger (1) als Biegeteil ausgebildet ist, wobei zwischen den Seitenwänden (4) und dem Obergurt (2) sowie zwischen den Seitenwänden (4) und dem Untergurt (3) jeweils ein Biegebereich (5) ausgebildet ist.

3. Vorrichtung nach Anspruch 2, **dadurch gekennzeichnet, dass** der Querträger (1) zumindest am Obergurt (2) und am Untergurt (3) eine Gurtöffnung (6) aufweist, wobei zumindest eine der Gurtöffnungen (6) zumindest 50% der Fläche des Obergurts (2) bzw. des Untergurts (3) einnimmt.

4. Vorrichtung nach Anspruch 2 oder 3, **dadurch gekennzeichnet, dass** jedes Anbindungsmittel (13) mit einer Seitenwand (4) des Querträgers (1) verbunden ist.

5. Vorrichtung nach Anspruch 4, **dadurch gekennzeichnet, dass** das Anbindungsmittel (13) ein mit dem Querträger (1) verbundenes Gelenk (14) sowie ein mit dem Bremsträger (12) verbundenes Distanzelement (15) umfasst, um eine gelenkige Verbindung zwischen Bremsträger (12) und Querträger (1) herzustellen.

6. Vorrichtung nach Anspruch 5, **dadurch gekennzeichnet, dass** das Gelenk (14) im Schubmittelpunkt des Querträgers (1) angeordnet ist.

7. Vorrichtung nach Anspruch 4, **dadurch gekennzeichnet, dass** das Anbindungsmittel (13) zumindest eine normal zur Längsachse (7) ausgerichtete Konsole (16) umfasst, welche einen ersten Verbindungsabschnitt (17) der mit dem Querträger (1) verbunden ist und einen zweiten Verbindungsabschnitt (18) der mit dem Bremsträger (12) verbunden ist aufweist, und dass die Verbindungsabschnitte (17,18) mit Querträger (1) bzw. Bremsträger (12) verschweißt sind.

8. Vorrichtung nach Anspruch 7, **dadurch gekennzeichnet, dass** der erste Verbindungsabschnitt (17) C-förmig und am Querträger (1) anliegend ausgebildet ist, sodass der erste Verbindungsabschnitt (17) die Seitenwand (4) des Querträgers (1) zur Gänze umgreift.

9. Vorrichtung nach Anspruch 7 oder 8, **dadurch gekennzeichnet, dass** der zweite Verbindungsabschnitt (18) einen spitzen Winkel mit einer durch Längenrichtung (8) und Längsachse (7) aufgespannten Ebene einschließt, wobei der gedachte Schnittpunkt zwischen der Verlängerung des zweiten Verbindungsabschnitts (18) und der Ebene auf der von der Längsachse (7) abgewandten Seite der Seitenwand (4) angeordnet ist.

10. Vorrichtung nach einem der Ansprüche 1 bis 9, **dadurch gekennzeichnet, dass** der Bremsträger (12) zwei Seitenelemente (19) und einen die beiden verbindenden Steg (20) umfasst, wobei der Bremsträger (12) in Längenrichtung (8) gesehen einen im Wesentlichen H-förmigen Querschnitt aufweist.

11. Vorrichtung nach einem der Ansprüche 1 bis 10, **dadurch gekennzeichnet, dass** der Bremsträger (12) zwei auskragende Abschnitte (21,22) und einen die beiden auskragenden Abschnitte (21,22) verbindenden Zentralabschnitt (23) umfasst, wobei sich die auskragenden Abschnitte (21,22) jeweils von einer Seitenwand (4) des Querträgers (1) parallel zur Längenrichtung (8) nach außen erstrecken und der Zentralabschnitt (23) den Querträger (1) in Längenrichtung (8) überbrückt.

12. Vorrichtung nach Anspruch 10 und 11, **dadurch gekennzeichnet, dass** das Anbindungsmittel (13) konsolenartige Abschnitte (24,25) der Seitenelemente (19) zur Verbindung mit den zweiten Verbindungsabschnitten (18) umfasst, welche konsolenartigen Abschnitte (24,25) jeweils in den auskragenden Abschnitten (21,22) des Bremsträgers (12), auf der dem Querträger (1) zugewandten Seite der Seitenelemente (19) angeordnet sind.

13. Fahrwerksrahmen mit einer Vorrichtung zur Befestigung von Bremseinrichtungen nach einem der Ansprüche 1 bis 12, umfassend zwei Längsträger, sowie einen die beiden Längsträger verbindenden Querträger (1), wobei zwei Bremsträger (12) mit offenem Querschnitt über Anbindungsmittel (13) mit dem Querträger (1) verbunden sind, und wobei jeder Bremsträger (12) in Längenrichtung (8) jeweils endseitig eine Befestigungsstelle (10,11) für Bremseinrichtungen aufweist.

14. Fahrwerksrahmen nach Anspruch 13, **dadurch gekennzeichnet, dass** die Anbindungsmittel (13) eines Bremsträgers (12) vier konsolenartige Abschnitte (24,25) und vier Konsolen (16) umfassen, wobei jeweils der erste Verbindungsabschnitt (17) einer Konsole (16) mit einer Seitenwand (4) des Querträgers (1) und der zweite Verbindungsabschnitt (18) mit einem konsolenartigen Abschnitt (24,25) eines Seitenelements (19) des Bremsträgers (12) verbunden ist.

15. Fahrwerksrahmen nach Anspruch 13 oder 14, **dadurch gekennzeichnet, dass** zumindest ein Zusatzträger (26), der parallel zur Längsachse (7) des Querträgers (1) ausgerichtet ist, vorgesehen ist, welcher Zusatzträger (26) zwei auskragende Abschnitte (21,22) der beiden Bremsträger (12) verbindet, wobei der Zusatzträger (26) eine weitere Befestigungsstelle (27) für eine Bremseinrichtung aufweist.

## Claims

1. Device for securing braking devices to a chassis frame of a rail vehicle, comprising a cross member (1) of the chassis frame, said cross member (1) having a longitudinal axis (7), and at least two securing points (10, 11) for braking devices, wherein the securing points (10, 11) are spaced apart from the cross member (1) in a lengthwise direction (8) which lies normal to the longitudinal axis (7),
**characterised in that**
at least one securing point (10, 11) is arranged at each end of a continuous brake carrier (12), said brake carrier (12) having an open cross section,
wherein attachment means (13) are provided via which the brake carrier (12) is both connected to the cross member (1) and is spaced apart from the cross member (1) in a vertical direction (9).

2. Device according to claim 1, **characterised in that** the cross member (1) has an upper flange (2), a lower flange (3) and two side walls (4), said elements (2, 3, 4) forming a box profile, and that the cross member (1) is developed as a bent part, wherein a bent region (5) is formed in each case between the side walls (4) and the upper flange (2) and between the side walls (4) and the lower flange (3).

3. Device according to claim 2, **characterised in that** the cross member (1) has a flange opening (6) at least at the upper flange (2) and at the lower flange (3), wherein at least one of the flange openings (6) occupies at least 50% of the surface of the upper flange (2) and the lower flange (3) respectively.

4. Device according to claim 2 or 3, **characterised in that** each attachment means (13) is connected to a side wall (4) of the cross member (1).

5. Device according to claim 4, **characterised in that** the attachment means (13) comprises a joint (14) which is connected to the cross member (1) and a spacer element (15) which is connected to the brake carrier (12), in order to create a pivoted connection between brake carrier (12) and cross member (1).

6. Device according to claim 5, **characterised in that** the joint (14) is arranged in the shear centre of the cross member (1).

7. Device according to claim 4, **characterised in that** the attachment means (13) comprises at least one bracket (16) which is oriented normal to the longitudinal axis (7) and has a first connection section (17) that is connected to the cross member (1) and a second connection section (18) that is connected to the brake carrier (12), and that the connection sections (17, 18) are welded to the cross member (1) and brake carrier (12) respectively.

8. Device according to claim 7, **characterised in that** the first connection section (17) is C-shaped and fits closely against the cross member (1), such that the first connection section (17) encompasses the side wall (4) of the cross member (1) completely.

9. Device according to claim 7 or 8, **characterised in that** the second connection section (18) encloses an acute angle with a plane which extends over a lengthwise direction (8) and longitudinal axis (7), wherein the imaginary intersection point between the extension of the second connection section (18) and the plane is arranged on that side of the side wall (4) which faces away from the longitudinal axis (7).

10. Device according to one of claims 1 to 9, **characterised in that** the brake carrier (12) comprises two side elements (19) and a web (20) which connects them, wherein the brake carrier (12) has an essentially H-shaped cross section viewed in a lengthwise direction (8).

11. Device according to one of claims 1 to 10, **characterised in that** the brake carrier (12) comprises two projecting sections (21, 22) and a central section (23) which connects the two projecting sections (21, 22), wherein the projecting sections (21, 22) each extend outwards from a side wall (4) of the cross member (1) and parallel to the lengthwise direction (8), and the central section (23) bridges the cross member (1) in a lengthwise direction (8) .

12. Device according to claim 10 and 11, **characterised in that** the attachment means (13) comprise bracket-type sections (24, 25) of the side elements (19) for connection to the second connection sections (18), said bracket-type sections (24, 25) being arranged in each case in the projecting sections (21, 22) of the brake carrier (12) on that side of the side elements (19) which faces towards the cross member (1).

13. Chassis frame with a device for securing braking devices according to one of claims 1 to 12, comprising two longitudinal members and a cross member (1) which connects the two longitudinal members, wherein two brake carriers (12) with open cross sections are connected to the cross member (1) via attachment means (13), and wherein each brake carrier (12) has a securing point (10, 11) for braking devices at each end in a lengthwise direction (8).

14. Chassis frame according to claim 13, **characterised in that** the attachment means (13) of a brake carrier (12) comprise four bracket-type sections (24, 25) and four brackets (16), wherein the first connection section (17) of a bracket (16) is connected to a side wall (4) of the cross member (1) in each case and the second connection section (18) is connected to a bracket-type section (24, 25) of a side element (19) of the brake carrier (12).

15. Chassis frame according to claim 13 or 14, **characterised in that** at least one supplementary member (26) is provided, oriented parallel to the longitudinal axis (7) of the cross member (1), which supplementary member (26) connects two projecting sections (21, 22) of the two brake carriers (12), wherein the supplementary member (26) has a further securing point (27) for a braking device.

## Revendications

1. Système de fixation de dispositifs de freinage au niveau d'un châssis de train de roulement d'un véhicule ferroviaire, comprenant une traverse (1), présentant un axe longitudinal (7), du châssis de train de roulement et au moins deux points de fixation (10, 11) destinés à des dispositifs de freinage, dans lequel les points de fixation (10, 11) sont espacés par rapport à la traverse (1) dans un sens de la longueur (8) qui est perpendiculaire à l'axe longitudinal (7),
**caractérisé en ce que**
respectivement au moins un point de fixation (10, 11) est agencé côté extrémité au niveau d'un support de frein (12) traversant, ledit support de frein (12) présentant un profil transversal ouvert,
dans lequel des moyens de liaison (13) sont prévus, par l'intermédiaire desquels le support de frein (12), d'un côté, est relié à la traverse (1) et, de l'autre côté, est espacé par rapport à la traverse (1) dans une direction de hauteur (9) .

2. Système selon la revendication 1, **caractérisé en ce que** la traverse (1) présente une membrure supérieure (2), une membrure inférieure (3) et deux parois latérales (4), lesdits éléments (2, 3, 4) constituant un profil en forme de caisson, et la traverse (1) est réalisée sous forme de pièce cintrée, dans lequel une région de cintrage (5) est respectivement constituée entre les parois latérales (4) et la membrure supérieure (2) ainsi qu'entre les parois latérales (4) et la membrure inférieure (3).

3. Système selon la revendication 2, **caractérisé en ce que** la traverse (1) présente une ouverture de membrure (6) au moins au niveau de la membrure supérieure (2) et au niveau de la membrure inférieure (3), dans lequel au moins une des ouvertures de membrure (6) représente au moins 50 % de la surface de la membrure supérieure (2) resp. de la membrure inférieure (3).

4. Système selon la revendication 2 ou 3, **caractérisé en ce que** chaque moyen de liaison (13) est relié à une paroi latérale (4) de la traverse (1).

5. Système selon la revendication 4, **caractérisé en ce que** le moyen de liaison (13) comprend une articulation (14) reliée à la traverse (1) ainsi qu'un élément d'écartement (15) relié au support de frein (12), de manière à créer une liaison articulée entre le support de frein (12) et la traverse (1).

6. Système selon la revendication 5, **caractérisé en ce que** l'articulation (14) est agencée au niveau du centre de poussée de la traverse (1).

7. Système selon la revendication 4, **caractérisé en ce que** le moyen de liaison (13) comprend au moins une console (16) orientée de manière perpendiculaire par rapport à l'axe longitudinal (7), ladite console présentant une première section de liaison (17) qui est reliée à la traverse (1) et une deuxième section de liaison (18) qui est reliée au support de frein (12), et les sections de liaison (17, 18) sont soudées à la traverse (1) resp. au support de frein (12).

8. Système selon la revendication 7, **caractérisé en ce que** la première section de liaison (17) est réalisée en forme de C et est adjacente à la traverse (1), de sorte que la première section de liaison (17) enserre la paroi latérale (4) de la traverse (1) dans sa totalité.

9. Système selon la revendication 7 ou 8, **caractérisé en ce que** la deuxième section de liaison (18) forme un angle aigu avec un plan s'étendant dans le sens de la longueur (8) et passant par l'axe longitudinal (7), dans lequel le point d'intersection envisagé est agencé entre le prolongement de la deuxième section de liaison (18) et le plan situé du côté de la paroi latérale (4) qui est détourné de l'axe longitudinal (7) .

10. Système selon l'une quelconque des revendications 1 à 9, **caractérisé en ce que** le support de frein (12) comprend deux éléments latéraux (19) et une entretoise (20) reliant lesdits deux éléments, dans lequel le support de frein (12) présente un profil transversal essentiellement en forme de H, considéré dans le sens de la longueur (8).

11. Système selon l'une quelconque des revendications 1 à 10, **caractérisé en ce que** le support de frein (12) comprend deux sections en porte-à-faux (21, 22) et une section centrale (23) reliant les deux sections en porte-à-faux (21, 22), dans lequel les sections en porte-à-faux (21, 22) s'étendent vers l'extérieur parallèlement au sens de la longueur (8) respectivement à partir d'une paroi latérale (4) de la traverse (1) et la section centrale (23) enjambe la traverse (1) dans le sens de la longueur.

12. Système selon les revendications 10 et 11, **caractérisé en ce que** le moyen de liaison (13) comprend des sections de type console (24, 25) des éléments latéraux (19) en vue d'une liaison avec les deuxièmes sections de liaison (18), lesdites sections de type console (24, 25) étant agencées respectivement dans les sections en porte-à-faux (21, 22) du support de frein (12), sur le côté des éléments latéraux (19) qui est détourné de la traverse (1).

13. Châssis de train de roulement comprenant un système destiné à la fixation de dispositifs de freinage selon l'une quelconque des revendications 1 à 12, comprenant deux supports longitudinaux, ainsi qu'une traverse (1) reliant les deux supports longitudinaux, dans lequel deux supports de frein (12) présentant un profil transversal ouvert sont reliés à la traverse (1) par l'intermédiaire de moyens de liaison (13), et dans lequel chaque support de frein (12) présente dans le sens de la longueur (8) respectivement côté extrémité un point de fixation (10, 11) destiné à des dispositifs de freinage.

14. Châssis de train de roulement selon la revendication 13, **caractérisé en ce que** les moyens de liaison (13) d'un support de frein (12) comprennent quatre sections de type console (24, 25) et quatre consoles (16), dans lequel respectivement la première section de liaison (17) d'une console (16) est reliée à une paroi latérale (4) de la traverse (1) et la deuxième section de liaison (18) est reliée à une section de type console (24, 25) d'un élément latéral (19) du support de frein (12) .

15. Châssis de train de roulement selon la revendication 13 ou 14, **caractérisé en ce qu'**au moins un support supplémentaire (26), qui est orienté parallèlement à l'axe longitudinal (7) de la traverse (1), est prévu, ledit support supplémentaire (26) reliant deux sections en porte-à-faux (21, 22) des deux supports de frein (12), dans lequel le support supplémentaire (26) présente un autre point de fixation (27) destiné à un dispositif de freinage.
